# EUROPÄISCHE PATENTSCHRIFT

(11) **EP 2 529 443 B1**
(45) Veröffentlichungstag und Bekanntmachung des Hinweises auf die Patenterteilung: **18.12.2013**
(21) Anmeldenummer: 11701272.4
(22) Anmeldetag: 28.01.2011
(51) Int. Cl.: H01M 10/0525, H01M 4/58, H01M 4/62, H01M 4/485, H01M 4/131, H01M 4/136, H01M 4/36

(54) **ELEKTRODE FÜR EINE SEKUNDÄRLITHIUMIONENBATTERIE**
ELECTRODE FOR A SECONDARY LITHIUM ION BATTERY
ÉLECTRODE POUR UNE BATTERIE AU LITHIUM-ION SECONDAIRE

(30) Priorität: 28.01.2010 DE 102010006076
(43) Veröffentlichungstag der Anmeldung: 05.12.2012
(73) Patentinhaber: Süd-Chemie IP GmbH & Co. KG, 80333 München (DE)
(72) Erfinder: HOLZAPFEL, Michael, 85354 Freising (DE); TRAN, Nicolas, 85405 Nandlstadt (DE)
(74) Vertreter: Stolmár & Partner
(86) Internationale Anmeldenummer: PCT/EP2011/051195
(87) Internationale Veröffentlichungsnummer: WO 2011/092279

(56) Entgegenhaltungen:
- EP-A2- 1 291 941
- WO-A1-2006/050098
- US-A1- 2006 115 732
- US-A1- 2007 298 321
- US-A1- 2010 003 592
- DENG J ET AL: "Preparation and electrochemical properties of Li4Ti5O12 thin film electrodes by pulsed laser deposition", JOURNAL OF POWER SOURCES, ELSEVIER SA, CH, Bd. 193, Nr. 2, 5. September 2009 (2009-09-05), Seiten 816-821, XP026251163, ISSN: 0378-7753, DOI: DOI:10.1016/J.JPOWSOUR.2009.03.074 [gefunden am 2009-04-18]

## Beschreibung

Die vorliegende Erfindung betrifft eine leitmittelzusatzfreie Elektrode für eine Sekundärlithiumionenbatterie mit einer Lithium-Metall-Sauerstoffverbindung als Aktivmaterial und eine Sekundärlithiumionenbatterie, die eine erfindungsgemäße Elektrode enthält.

Das Gebiet von wiederaufladbaren Lithiumionenbatterien (Sekundärlithiumionenbatterien) ist seit geraumer Zeit Gegenstand intensivster Forschung, insbesondere im Hinblick auf den Ersatz herkömmlicher Antriebsarten (Otto- und Dieselmotor) durch Elektromotoren, sowie durch die Verwendung von Lithiumionenbatterien in Rechnern, Mobiltelefonen und elektrisch betriebenen Werkzeugen.

Neue Materialien für Kathoden und Anoden derartiger Lithiumionenbatterien stehen -neben neuen Elektrolytmaterialien- dabei besonders im Fokus des Interesses.

So wird die Verwendung von Lithiumtitanat Li₄Ti₅O₁₂ oder kurz Lithiumtitanspinell seit einiger Zeit als Ersatz für Graphit als Anodenmaterial in wiederaufladbaren Lithium-Ionen-Batterien vorgeschlagen, siehe z.B. US 2007/0298321 A1.

Eine aktuelle Übersicht über Anodenmaterialien in derartigen Batterien findet sich z.B. in Bruce et al., Angew. Chem. Int. Ed. 2008, 47, 2930-2946.

Die Vorteile von Li₄Ti₅O₁₂ gegenüber Graphit sind insbesondere dessen bessere Zyklenbeständigkeit, seine bessere thermische Belastbarkeit sowie die höhere Betriebssicherheit. Li₄Ti₅O₁₂ weist eine relativ konstante Potentialdifferenz von 1,55 V gegenüber Lithium auf und erreicht mehrere 1000 Lade- und Entladezyklen mit einem Kapazitätsverlust von nur <20 %.

Damit zeigt Lithiumtitanat ein deutlich positiveres Potential als Graphit, der bislang üblicherweise in wiederaufladbaren Lithium-Ionen-Batterien als Anode verwendet wird.

Allerdings ergibt sich durch das höhere Potential auch eine niedrigere Spannungsdifferenz. Zusammen mit einer verringerten Kapazität von 175 mAh/g verglichen mit 372 mAh/g (theoretischer Wert) von Graphit führt dies zu einer deutlich niedrigeren Energiedichte im Vergleich zu Lithium-Ionen-Batterien mit Graphitanoden.

Außerdem weist Li₄Ti₅O₁₂ eine hohe Lebensdauer auf und ist ungiftig und daher auch nicht als umweltgefährdend einzustufen.

Die Materialdichte von Lithiumtitanspinell ist vergleichsweise gering (3,5 g/cm³) im Vergleich zu z.B. Lithiummanganspinell oder Lithiumcobaltoxid (4 bzw. 5 g/cm³), die als Kathodenmaterialien verwendet werden.

Jedoch ist Lithiumtitanspinell (enthaltend ausschliesslich Ti⁴⁺) ein elektronischer Isolator, weswegen in Elektrodenzusammensetzungen des Standes der Technik immer der Zusatz eines leitfähigen Additivs (Leitmittel), wie z.B. Acetylenschwarz, Ruß , Ketjen Schwarz etc. notwendig ist, um die nötige elektronische Leitfähigkeit der Elektrode zu gewährleisten. Dadurch vermindert sich die Energiedichte von Batterien mit Lithiumtitanspinell-Anoden. Es ist allerdings auch bekannt, dass Lithiumtitanspinell im reduzierten Zustand (in seiner "geladenen" Form, enthaltend Ti³⁺ und Ti⁴⁺) ein beinahe metallischer Leiter wird, wodurch die elektronische Leitfähigkeit der ganzen Elektrode deutlich ansteigen müsste.

Auf dem Gebiet der Kathodenmaterialien wird in Lithium-Ionen-Batterien seit kurzem vorzugsweise dotiertes bzw. undotiertes LiFePO₄ als Kathodenmaterial verwendet, so dass z.B. in einer Kombination von Li₄Ti₅O₁₂ und LiFePO₄ eine Spannungsdifferenz von 2 V erzielt werden kann.

Die nicht-dotierten oder dotierten gemischten Lithiumübergangsmetallphosphate mit geordneter oder modifizierter Olivinstruktur oder auch NASICON Struktur, wie LiFePO₄, LiMnPO₄, LiCoPO₄, LiMn₁₋ₓ,FeₓPO₄, Li₃Fe₂(PO₄)₃ wurden zuerst von Goodenough et al. (US 5,910,382, US 6,514,640) als Kathodenmaterial in Elektroden von Sekundärlithiumionenbatterien vorgeschlagen. Auch diese Materialien, insbesondere LiFePO₄ sind eigentlich schlecht bis gar nicht leitende Materialien. Weiter wurden auch die entsprechende Vanadate untersucht.

Das dotierte bzw. nicht-dotierte Lithiumübergangsmetallphosphat bzw. -vanadat, wie auch das oben erwähnte Lithiumtitanat muß daher immer mit einem wie vorstehend schon näher beschriebenen Leitmittelzusatz versetzt werden, bevor es zu Kathodenformulierungen verarbeitet werden kann. Alternativ werden Lithiumübergangsmetallphosphat bzw. - vanadat sowie auch Lithiumtitanspinell-Kohlenstoffverbundmaterialien vorgeschlagen, die allerdings aufgrund ihres geringen Kohlenstoffgehalts auch immer des Zusatzes eines Leitmittels bedürfen. So beschreiben die EP 1 193 784, die EP 1 193 785 sowie die EP 1 193 786 sog. Kohlenstoffkompositmaterialien aus LiFePO₄ und amorphem Kohlenstoff, der bei der Herstellung des Eisenphosphats aus Eisensulfat, Natriumhydrogenphosphat auch als Reduktionsmittel für verbleibende Reste an Fe³⁺ im Eisensulfat sowie zur Verhinderung der Oxidation von Fe²⁺ zu Fe³⁺ dient. Die Zugabe von Kohlenstoff soll außerdem die Leitfähigkeit des Lithiumeisensphosphataktivmaterials in der Kathode erhöhen. So gibt insbesondere die EP 1 193 786 an, dass Kohlenstoff in einen Gehalt von nicht weniger als 3 Gew.-% in dem Lithiumeisenphosphat-Kohlenstoffverbundmaterial enthalten sein muss, um die nötige Kapazität und entsprechende Zykluscharakteristika, die für eine gut funktionierende Elektrode nötig sind, zu erreichen.

Zur Herstellung der vorgenannten Anoden- und Kathodenmaterialien, insbesondere von Lithiumtitanspinell und den Lithiumübergangsmetallphosphaten werden sowohl Festkörpersynthesen wie auch sog. Hydrothermalsynthesen aus wässriger Lösung vorgeschlagen. Als Dotierungskationen sind aus dem Stand der Technik mittlerweile nahezu sämtliche Metall- und Übergangsmetallkationen bekannt.

Die Aufgabe der vorliegenden Erfindung bestand somit darin, weitere Elektroden mit einer erhöhten spezifischen Energiedichte (Wh/kg bzw. Wh/l) und mit einer höheren Belastbarkeit für wiederaufladbare Lithiumionenbatterien bereitzustellen.

Diese Aufgabe wird gelöst durch eine leitmittelzusatzfreie Elektrode gemäß dem Anspruch 1.

Unerwarteterweise wurde gefunden, dass auf den Zusatz von Leitmitteln, wie Ruß, Acetylen Schwarz, Ketjen-Schwarz Graphit etc. in der Formulierung einer erfindungsgemäßen Elektrode vollständig verzichtet werden kann, ohne dass deren Funktionstüchtigkeit beeinträchtigt ist. Dies war umso mehr überraschend, da wie vorstehend ausgeführt, sowohl die Lithiumtitanspinelle und die Lithiumübergangsmetallphosphate bzw. -vanadate typischerweise Isolatoren oder elektrisch sehr schlecht leitend sind.

Der Begriff "leitmittelzusatzfrei" bedeutet vorliegend aber auch, dass geringe Mengen an Kohlenstoff in der Elektrodenformulierung, z.B. ohne dadurch beschränkt zu sein durch eine kohlenstoffhaltige Beschichtung oder in Form eines Lithiumtitan-Kohlenstoff-Verbundmaterials im Sinne der EP 1 193 784 A1 oder als Kohlenstoffpartikel vorliegen können, diese jedoch einen Anteil von maximal 1,5 Gew.-%, bevorzugt maximal 1 Gew.-%, noch bevorzugter maximal 0,5 Gew.-% Kohlenstoff bezogen auf das Aktivmaterial der Elektroden nicht überschreiten.

Im Vergleich zu Elektroden des Standes der Technik mit einem Leitmittelzusatz von typischerweise 3-20% erhält man bei der erfindungsgemäßen leitmittelzusatzfreien Elektrode eine Erhöhung der Elektrodendichte (gemessen in g/cm³). So wurden z.B. bei einer Zunahme der Elektrodendichte gegenüber Elektroden mit Leitmittelzusatz von typischerweise mehr als 10%, bevorzugt mehr als 15% und noch mehr bevorzugt von mehr als 25% gemessen.

Diese Erhöhung der Elektrodendichte führt selbst bei einer niedrigen Lade-/Entladerate erfindungsgemäßer Elektroden zu einer höheren volumetrischen Kapazität.

Durch die höhere Dichte des Aktivmaterials werden somit weiter ohne Leitmittelzusatz Elektroden mit einer höheren spezifischen Leistung (W/kg bzw. W/l) und auch spezifischen Energiedichte (Wh/kg bzw. Wh/l) erhalten als bei Elektroden mit Leitmittelzusatz.

Die erfindungsgemäße Elektrode enthält weiter einen Binder. Als Binder kann jeder dem Fachmann an sich bekannte Binder eingesetzt werden, wie beispielsweise Polytetrafluorethylen (PTFE), Polyvinylidendifluorid (PVDF), Polyvinylidendifluorid -Hexafluorpropylen Copolymere (PVDF-HFP), Ethylen-propylendien-ter-Polymere (EPDM), Tetrafluorethylen-Hexafluorpropylen Copolymere, Polyethylenoxide (PEO), Polyacrylnitrile (PAN), Polyacrylmethacrylate (PMMA), Carboxymethylcellulosen (CMC) deren Derivate und Mischungen davon.

Erfindungsgemäß weist die Elektrode einen Anteil an Aktivmaterial von ≥94 Gew.-% auf, noch bevorzugter von ≥96 Gew.-%. Selbst bei diesen hohen Gehalten an Aktivmasse in der erfindungsgemäßen Elektrode ist deren Funktionsfähigkeit nicht eingeschränkt.

Das Aktivmaterial ist erfindungsgemäß ausgewählt aus der Gruppe bestehend aus dotiertem oder nicht dotiertem Lithiumtitanaten mit Spinellstruktur, Lithium-Metall-Phosphaten und Lithium-Metall-Vanadaten (die beiden letzteren Verbindungsklassen sowohl mit geordneter wie modifizierter Olivin Struktur und mit NASICON Struktur).

In vorteilhaften Weiterbildungen der vorliegenden Erfindung weisen die Partikel des Aktivmaterials eine Kohlenstoffbeschichtung auf. Diese wird z.B. wie in der EP 1 049 182 B1 beschrieben aufgebracht. Weitere Beschichtungsmethoden sind dem Fachmann bekannt. Der Kohlenstoffanteil der Gesamtelektrode liegt in dieser speziellen Ausführungsform bei ≤1.5 Gew.-%, also deutlich unter dem im vorstehend zitierten Stand der Technik genannten bislang als notwendig erachteten Wert.

In einer bevorzugten Ausführungsform ist daher das Aktivmaterial ein dotiertes oder nicht dotiertes Lithiumtitanat wobei diese Elektrode als Anode fungiert.

Der Begriff "Lithiumtitanat" bzw. "Lithiumtitanspinell" bezieht sich in seiner Allgemeinheit vorliegend sowohl auf die nicht-dotierten als auch auf die dotierten Formen.

Er umfasst dabei alle Lithiumtitanspinelle vom Typ Li₁₊ₓTi₂₋ₓO₄ mit 0 ≤ x ≤ 1/3 der Raumgruppe Fd3m und generell auch sämtliche gemischten Lithium-Titan-Oxide der generischen Formel LiₓTi_{y}O (0 <x, y <1).

Ganz besonders bevorzugt ist das erfindungsgemäß verwendete Lithiumtitanat phasenrein. Der Begriff "phasenrein" bzw. "phasenreines Lithiumtitanat" bedeutet erfindungsgemäß, dass im Endprodukt mittels XRD Messungen im Rahmen der üblichen Meßgenauigkeit keine Rutilphase nachweisbar ist. Anders ausgedrückt, ist das erfindungsgemäße Lithiumtitanat in dieser bevorzugten Ausführungsform rutilfrei.

In bevorzugten Weiterbildungen der Erfindung ist das erfindungsgemäße Lithiumtitanat wie schon gesagt mit wenigstens einem weiteren Metall dotiert, was zu einer weiter erhöhten Stabilität und Zyklenbeständigkeit bei Verwendung des dotierten Lithiumtitanats als Anode führt. Insbesondere wird dies mit dem Einbau von zusätzlichen Metallionen, bevorzugterweise Al, Mg, Ga, Fe, Co, Sc, Y, Mn, Ni, Cr, V bzw. mehrerer dieser Ionen in die Gitterstruktur erzielt. Ganz besonders bevorzugt ist dabei Aluminium. Auch die dotierten Lithiumtitanspinelle sind in besonders bevorzugten Ausführungsformen rutilfrei.

Die Dotierungsmetallionen, die entweder auf Gitterplätzen des Titans oder Lithiums sitzen können, sind bevorzugt in einer Menge von 0,05 bis 10 Gew.-%, bevorzugt 1-3 Gew.-%, bezogen auf den gesamten Spinell vorhanden.

In einer weiteren bevorzugten Ausführungsform der vorliegenden Erfindung ist das Aktivmaterial der Elektrode ein dotiertes oder nicht dotiertes Lithium-Metall-Phosphat oder -vanadat mit geordneter oder modifizierter Olivinstruktur oder NASICON Struktur und die Elektrode fungiert dabei als Kathode.

Nicht-dotiert heißt also, dass reines, insbesondere phasenreines Lithiummetallphosphat verwendet wird. Der Begriff "phasenrein" wird auch bei Lithiummetallphosphaten wie vorstehend definiert verstanden.

Das Lithiumübergangsmetallphosphat oder -vanadat gehorcht der Formel

LiₓN_{y}M_{1-y}ZO₄,

wobei N ein Metall ist, ausgewählt aus der Gruppe Mg, Zn, Cu, Ti, Zr, Al, Ga, V, Sn, B, Nb, Ca oder Mischungen davon;
M ein Metall ist, ausgewählt aus der Gruppe Fe, Mn, Co, Ni, Cr, Cu, Ti, Ru oder Mischungen davon;
Z ist P oder V
und mit 0 < x ≤ 1 und 0 ≤ y < 1.

Das Metall M ist dabei bevorzugt ausgewählt aus der Gruppe bestehend aus Fe, Co, Mn oder Ni, weist also im Falle, dass y = O ist die Formeln LiFePO₄, LiCoPO₄, LiMnPO₄ bzw. LiNiPO₄ auf.

Unter einem dotierten Lithiumübergangsmetallphosphat oder - vanadat wird eine Verbindung der obengenannten Formel verstanden, bei der y > 0 ist und N ein Metallkation aus der Gruppe wie vorstehend definiert darstellt.

Ganz besonders bevorzugt ist N ausgewählt aus der Gruppe bestehend aus Nb, Ti, Zr, B, Mg, Ca, Zn oder Kombinationen davon, bevorzugt aber Ti, B, Mg, Zn und Nb darstellt. Typische bevorzugte Verbindungen sind z.B LiNb_{y}FeₓPO₄, LiMg_{y}FeₓPO₄, LiMg_{y}FeₓMn_{1-x-y}PO₄, LiZn_{y}FeₓMn_{1-x-y}PO₄, LiFeₓMn₁₋ₓPO₄, LiCo_{y}FeₓMn_{1-x-y}PO₄ mit x und y < 1 und x + y < 1.

Das dotierte oder nicht dotierte Lithium-Metall-Phosphat oder -vanadat hat wie schon vorstehend gesagt damit ganz besonders bevorzugt entweder eine geordnete oder modifizierte Olivinstruktur.

Lithium-Metall-Phosphate oder Vanadate in geordneter Olivinstruktur lassen sich strukturell in der rhombischen Raumgruppe Pnma (Nr. 62 der Internationalen Tabellen) beschreiben, wobei die kristallografische Aufstellung der rhombischen Elementarzelle hier so gewählt sei, dass die a-Achse die längste Achse und die c-Achse die kürzeste Achse der Elementarzelle Pnma ist, so dass die Spiegelebene m der Olivinstruktur senkrecht zur b-Achse zu liegen kommt. Dann ordnen sich die Lithiumionen des Lithium-Metall-Phosphates in Olivinstruktur parallel zur Kristallachse [010] bzw. senkrecht zur Kristallfläche {010} an, die damit auch die bevorzugte Richtung für die eindimensionale Lithiumionenleitung ist.

Modifizierte Olivinstruktur bedeutet, dass eine Modifikation entweder an den anionischen (z.B. Phosphat durch Vanadat) und /oder kationischen Stellen im Kristallgitter erfolgt, wobei die Substitution durch aliovalente oder gleiche Ladungsträger erfolgt um eine bessere Diffusion der Lithiumionen und eine verbesserte elektronische Leitfähigkeit zu ermöglichen.

In weiteren Ausführungsformen der vorliegenden Erfindung enthält die Elektrode weiter eine von der ersten verschiedene zweite Lithium-Metall-Sauerstoffverbindung, ausgewählt aus dotierten oder nicht dotierten Lithium-Metall-Oxiden, Lithium-Metall-Phosphaten, Lithium-Metall-Vanadaten und Mischungen davon. Es ist natürlich auch möglich, dass zwei, drei oder noch mehr weitere, verschiedene Lithium-Metall-Sauerstoffverbindungen enthalten sind. Es versteht sich für den Fachmann, dass natürlich nur Lithium-Metall-Sauerstoffverbindungen, die die gleiche Funktionalität aufweisen (also entweder als Anodenmaterial oder Kathodenmaterial fungieren) in einer Elektrodenformulierung enthalten sein können.

Die zweite Lithium-Metall-Sauerstoffverbindung ist bevorzugt ausgewählt aus dotiertem oder nicht dotiertem Lithiummanganoxid, Lithiumcobaltoxid, Lithiumeisenmanganphosphat, Lithiummanganphosphat. Die zweite Lithium-Metall-Sauerstoffverbindung ist insbesondere in speziellen Kathodenformulierungen von Vorteil und liegt typischerweise in einer Menge von ca. 3 - 50 Gew.-% bezogen auf die erste Lithium-Metall-Sauerstoffverbindung vor.

Die Aufgabe der vorliegenden Erfindung wird weiter gelöst durch eine Sekundärlithiumionenbatterie mit einer Anode, einer Kathode und einem Elektrolyten enthaltend eine erfindungsgemäße Elektrode.

Bevorzugt ist in der erfindungsgemäßen Sekundärlithiumionenbatterie das Aktivmaterial der Anode dotiertes oder nicht dotiertes Lithiumtitanat in der erfindungsgemäßen Elektrodenformulierung ohne Leitmittelzusatz. Die Kathode kann in dieser Ausführungsform dabei frei wählbar sein.

In einer weiteren bevorzugten Sekundärlithiumionenbatterie ist das Aktivmaterial der Kathode dotiertes oder nicht dotiertes Lithium-Metall-Phosphat in der erfindungsgemäßen Elektrodenformulierung ohne Leitmittelzusatz mit und ohne Vorhandensein der zweiten Lithium-Metall-Sauerstoffverbindung. Die Anode kann in dieser Ausführungsform dabei frei wählbar sein.

Ganz besonders bevorzugt ist in einer erfindungsgemäßen Sekundärlithiumionenbatterie das Aktivmaterial der Anode dotiertes oder nicht dotiertes Lithiumtitanat in der erfindungsgemäßen Elektrodenformulierung ohne Leitmittelzusatz und Aktivmaterial der Kathode dotiertes oder nicht dotiertes Lithium-Metall-Phosphat in der erfindungsgemäßen Elektrodenformulierung ohne Leitmittelzusatz.

Überraschenderweise wurde vorliegend somit gefunden, dass man Elektroden mit einer Lithium-Metall-Sauerstoffverbindung als Aktivmaterial ohne Leitmittelzusatz sowohl in der Ladung, als auch in der Entladung mit hohen bis sehr hohen Raten (20C) zyklen kann und das in verschiedenen Schichtdicken (Beladungen). Es wurde dabei im Vergleich zu Elektroden mit Leitmittelzusatz nur ein geringer Unterschied festgestellt. Dies wurde sowohl für reine Lithium-Metall-Sauerstoffverbindungen (hydrothermal und festkörpersynthetisch hergestellt) und auch für kohlenstoffbeschichtete Lithium-Metall-Sauerstoffverbindungen gefunden.

Ohne an eine bestimmte Theorie gebunden zu sein, kann der überraschende Befund, dass Lithium-Metall-Sauerstoffverbindungen auch ohne leitfähigen Zusatz als Elektrode einsetzbar sind, damit erklärt werden, dass selbst bei langer Entladung (Delithiierung) nie vollständig der nichtleitende Ausgangszustand erreicht wird. Dies gilt insbesondere für die Verbindungsklasse der Lithiumtitanate.

Bei Lithiumtitanaten verbleiben anscheinend immer noch Spuren von Ti³⁺ im Kristallgitter wodurch das Material und die Elektrode immer eine ausreichende elektronische Leitfähigkeit behalten, solange der Partikel-Partikel-Kontakt gut bleibt. Die elektronische Leitfähigkeit ist also kein limitierender Faktor beim Zyklen von Lithiumtitanaten.

Die Erfindung ist nachstehend anhand der Figuren und Ausführungsbeispiele näher erläutert, ohne dass diese als einschränkend verstanden werden sollen.

Es zeigen:
Figur 1 die Zyklenlebensdauer einer herkömmlichen Lithiumtitanatelektrode mit Zugabe von Leitruß;
Figuren 2a bis 2b die Polarisation einer Elektrode des Standes der Technik mit Aktivmaterial, das heißt mit Leitrußzugabe in Abhängigkeit von der Belastung;
Figur 3a die spezifische Kapazität einer erfindungsgemäßen Lithiumtitanatelektrode und Figur 3b die spezifische Kapazität einer Elektrode des Standes der Technik;
Figuren 4a und 4b die Entladungs- (4a) und Ladungskapazität (4b) einer erfindungsgemäßen Lithiumtitanatelektrode ohne Absenkung bei der Entladung;
Figuren 5a und 5b die Entladungs- (5a) bzw. Ladungskapazität (5b) einer erfindungsgemäßen Lithiumtitanatelektrode, mit Absenkung bei der Entladung;
Figuren 6a und 6b die spezifische Kapazität einer erfindungsgemäßen Elektrode, Fig. 6a: mit Absenkung bei der Entladung, Fig. 6b: ohne Absenkung bei der Entladung;
Figuren 7a bis 7b den Einfluss der Beladung mit Aktivmaterial auf die Kapazität einer erfindungsgemäßen Elektrode;
Figur 8a die Entladungskapazität einer erfindungsgemäßen Elektrode, die kohlenstoffbeschichtete Lithiumtitanatpartikel als Aktivmaterial enthält, Figur 8b die Entladungskapazität einer Elektrode des Standes der Technik, die mit Kohlenstoff beschichtetes Lithiumtitanat als Aktivmaterial enthält;
Figuren 9a bis 9b die Ladungskapazität einer erfindungsgemäßen Elektrode (9a) mit einer Elektrode des Standes der Technik (9b). die mit mit Kohlenstoff beschichtetes Lithiumtitanat als Aktivmaterial enthalten;
Figuren 10a bis 10b die spezifische Kapazität einer erfindungsgemäßen Elektrode (10a) verglichen mit einer Elektrode des Standes der Technik (10b), die mit mit Kohlenstoff beschichtetes Lithiumtitanat als Aktivmaterial enthalten;
Figur 11 den Vergleich der Ladungs-/Entladungskapazität bei verschiedenen Raten für erfindungsgemäßen Elektroden und Elektroden des Standes der Technik mit LiFePO₄ als Aktivmaterial;
Figur 12a die spezifische Entladekapazität bei 1C für Elektroden mit LiFePO₄ als Aktivmaterial des Standes der Technik und Figur 12b erfindungsgemäßer Elektroden die volumetrische Entladekapazität bei 1C für Elektroden mit LiFePO₄ als Aktivmaterial des Standes der Technik und erfindungsgemäßer Elektroden;
Figur 13 der Vergleich der Ladungs-/Entladungskapazität bei verschiedenen Raten für eine Elektrode und Elektroden des Standes der Technik mit LiMn_{0.56}Fe_{0.33}Zn_{0.10}PO₄ als Aktivmaterial;
Figur 14a die spezifische Entladekapazität bei 1C für Elektroden des Standes der Technik mit LiMn_{0.56}Fe_{0.33}Zn_{0.10}PO₄ als Aktivmaterial und Elektroden jeweils mit LiMn_{0.56}Fe_{0.33}Zn_{0.10}PO₄ als Aktivmaterial; Figur 14b die volumetrische Entladekapazität bei 1C für Elektroden des Standes der Technik und Elektroden mit LiMn_{0.56}Fe_{0.33}Zn_{0.10}PO₄ als Aktivmaterial.
Figur 15 die volumetrische Kapazität erfindungsgemäßer Elektroden und Elektroden des Standes der Technik mit Lithiumtitanat (sowohl mit Kohlenstoff beschichtet wie unbeschichtet

### Ausführungsbeispiele

Die Verbindungen Lithiumtitanat mit und ohne Kohlenstoffbeschichtung und Lithiumeisenphosphat mit und ohne Kohlenstoffbeschichtung sind bei den Firmen Süd-Chemie AG, Deutschland bzw. Phostech Lithium, Kanada kommerziell erhältlich. LiMn_{0,56}Fe_{0,33}Zn_{0,10}PO₄ mit und ohne Kohlenstoffbeschichtung kann analog zu den in der Literatur beschriebenen Verfahren zur Herstellung von LiFePO₄ hergestellt werden.

### 1. Herstellung von Elektroden

### 1.1 Elektroden des Standes der Technik

Eine Standardelektrode des Standes der Technik enthielt 85 % Aktivmaterial, 10 % Super P Ruß als Leitmittelzusatz und 5 Gew.-% Polyvinylidenfluorid (PVdF) als Binder (Solvay 21216).

### 2.1 Erfindungsgemäße Elektrode

### 2.1.1. Lithiumtitanat Anoden

Die Standardelektrodenformulierung für die erfindungsgemäße Elektrode betrug
a) 95 Gew.-% Aktivmaterial und 5 Gew.-% PVdF-Binder und
b) 98 Gew.-% Aktivmaterial und 2 Gew.-% PVdF-Binder.

Das Aktivmaterial wurde zusammen mit dem Binder (bzw. für die Elektroden des Standes mit dem Leitmittelzusatz) in N-Methylpyrrolidon gemischt, auf eine vorbehandelte (Primer) Aluminiumfolie mittels einer Rakel aufgetragen und das N-Methylpyrrolidon bei 105°C unter Vakuum verdampft. Anschließend wurden die Elektroden ausgeschnitten (13 mm Durchmesser) und in einer IR-Presse mit einem Druck von 5 Tonnen (3,9 Tonnen/cm²) über 20 Sekunden bei Raumtemperatur verpresst. Der Primer auf der Aluminiumfolie bestand aus einer dünnen Kohlenstoffbeschichtung, die die Haftung des Aktivmaterials verbessert, besonders wenn der Aktivmaterialgehalt in der Elektrode über 85 wt.-% beträgt.

Die Elektroden wurden dann über Nacht bei 120°C unter Vakuum getrocknet und im Falle eines Einsatzes als Anode in einer argongefüllten Glovebox in Halbzellen gegen Lithiummetall verbaut und elektrochemisch vermessen.

Die elektrochemischen Messungen wurden gegen Lithiummetall durchgeführt unter Verwendung von LP30 (Fa. Merck, Darmstadt) als Elektrolyt (EC (Ethylencarbonat):DMC (Dimethylcarbonat) = 1:1, 1 M LiPF₆). Das Testverfahren wurde im CCCV-Modus durchgeführt, das heißt Zyklen bei einem konstanten Strom mit der C/10 Rate für den ersten und mit der C Rate für die nachfolgenden Zyklen. Bei den Spannungsgrenzen (1,0 und 2,0 Volt gegen Li/Li⁺) folgte in einigen Fällen ein konstanter Spannungsteil, bis der Strom ungefähr auf die C/50-Rate fiel, um den Ladungs-/Entladungszyklus zu vervollständigen.

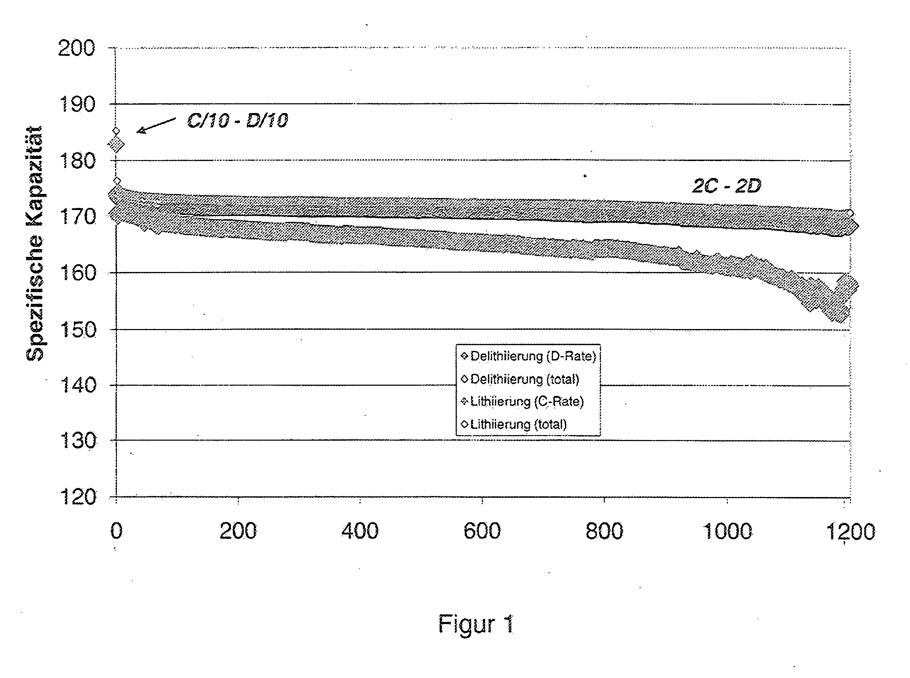

Figur 1 zeigt die spezifische Kapazität, das heißt die Zyklenlebensdauer einer Elektrode (Anode) enthaltend Lithiumtitanat als Aktivmaterial, des Standes der Technik, d.h. mit Leitmittelzusatz. Diese zeigen eine hohe Zyklenstabilität gegenüber Lithiummetall. Über 1000 Zyklen wurden nur 2 % der Gesamtentladungskapazität (Delithiierung) und 3,5 % der Ladungskapazität (Lithiierung) verloren. Die bei 2C erhaltene Kapazität zeigte etwas höhere Verluste, waren aber noch < 6 %.

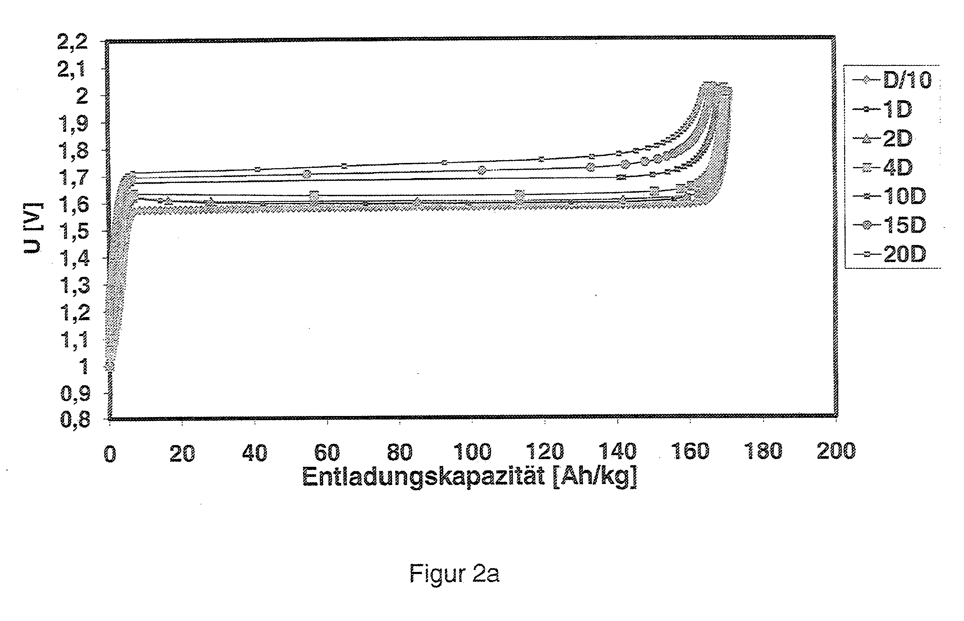

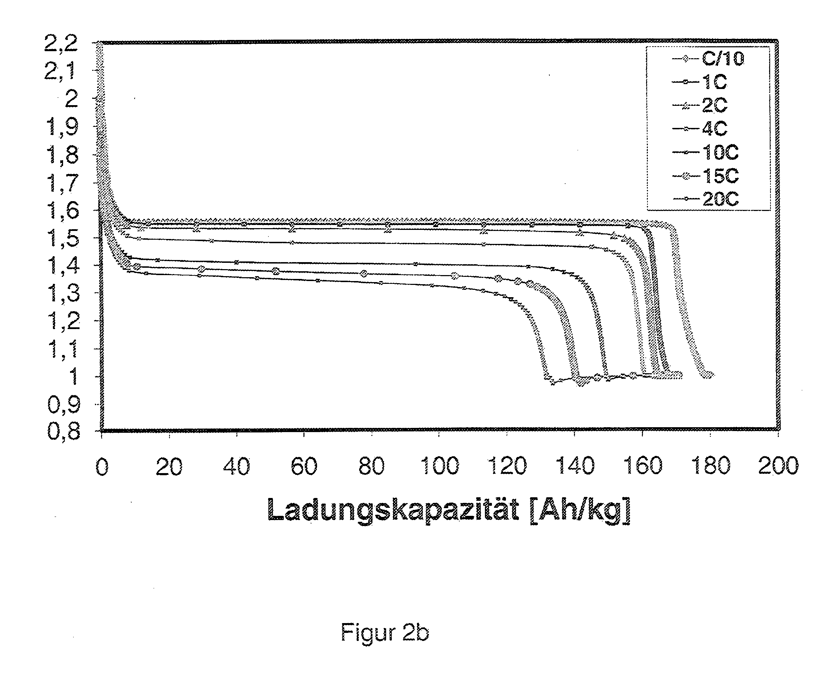

Figur 2a und 2b zeigen die Entladungs- bzw. Ladungskapazität einer Lithiumtitanatelektrode des Standes der. Daraus ist ersichtlich, dass die Polarisierung der Elektrode für die Entladung relativ niedrig ist, allerdings etwas höher für die Ladung. Die Beladung an Aktivmaterial betrug 2,54 mg/cm². Bei einer höheren Belastung (C-Rate) nahm die Polarisierung zu, worauf sich die Kapazität erniedrigt, da die Spannungsgrenzen früher erreicht werden.

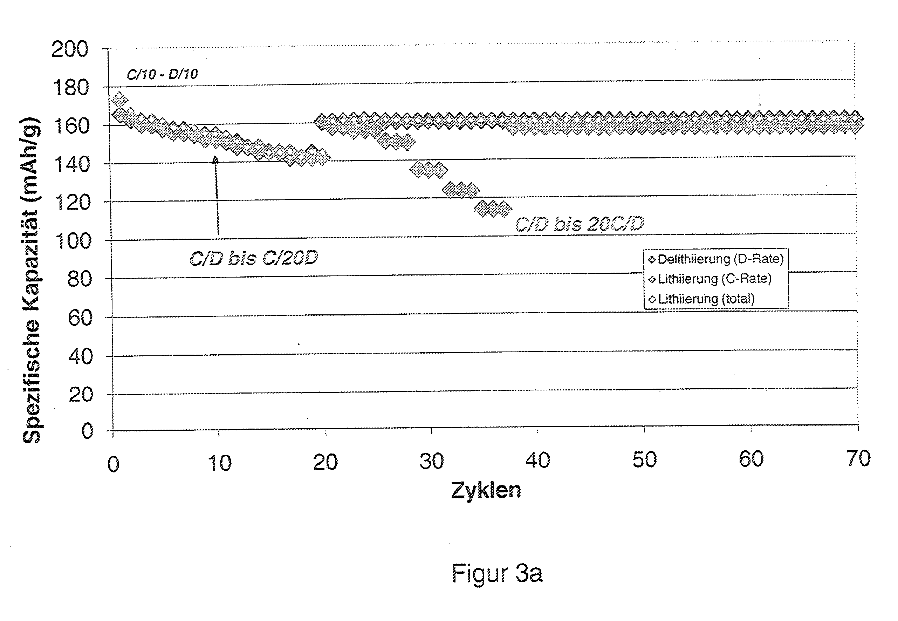

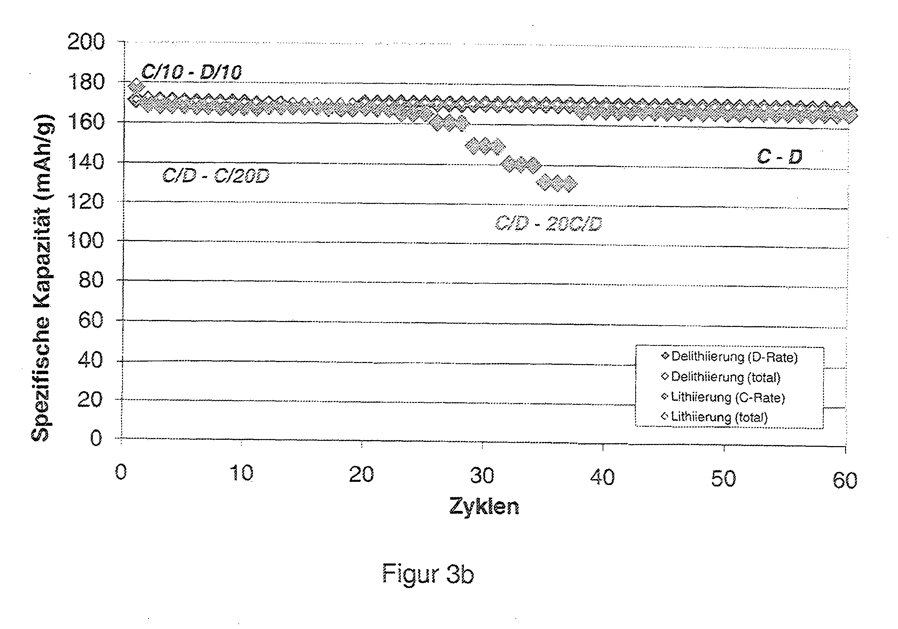

Die Figuren 3a und 3b zeigen die spezifische Kapazität einer erfindungsgemäßen Lithiumtitanatelektrode (95 Gew.-% Aktivmasse + 5 % Binder), 3,4 mg Beladung (3a) bzw. 4,07 mg Beladung (3b). Figur 3a zeigt die spezifischer Kapazität eine erfindungsgemäßen und Figur 3b die spezifische Kapazität einer Elektrode des Standes der Technik mit Leitruß.

Die Abwesenheit eines Leitmittelzusatzes erbringt folglich eine etwas geringere spezifische Kapazität bei Entladungs- bzw. Ladungszyklen. Jedoch ist die spezifische Kapazität immer noch sehr hoch.

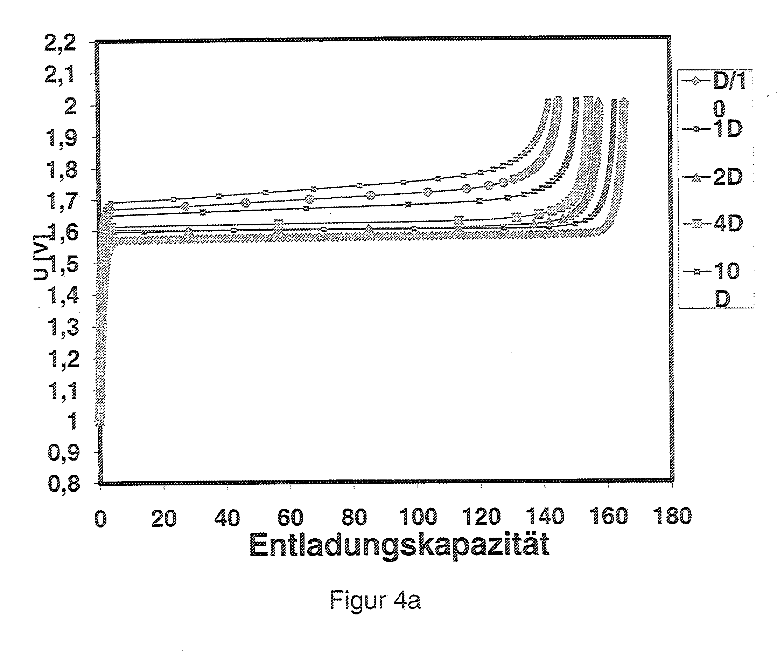

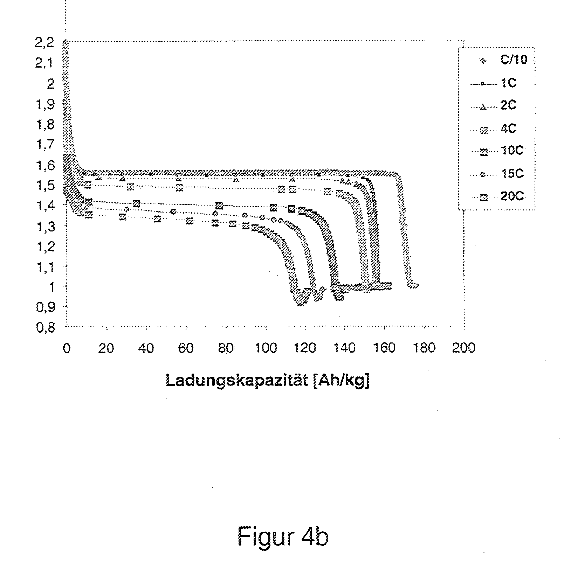

Die Figuren 4a und 4b zeigen die Entladungs- (4a) bzw. Ladungskapazität (4b) einer erfindungsgemäßen Elektrode in Bezug auf die Spannung und es ist ersichtlich, dass verglichen mit einer Elektrode mit Leitmittelzusatz (Fig. 2) die Polarisation nur leicht zunahm (m_{act} = 2,54 mg/cm²). Dies bedeutet, dass die Lithiierungs/Delithiierungsreaktion nur marginal durch das isolierende chemische Verhalten des Lithiumtitanats in seinem vollständig entlithiierten Zustand beeinflusst wird. Da ein elektronisch vollständig isolierendes Material als Elektrode nicht funktionieren kann, bedeutet dieses Ergebnis überraschenderweise, dass eine ausreichende elektronische Leitfähigkeit während der Ladungs-/Entladungsreaktion vorhanden sein muss. Die Messungen zeigen, dass es nicht zur Bildung von elektronisch isolierenden Gebieten in der Elektrode kommt.

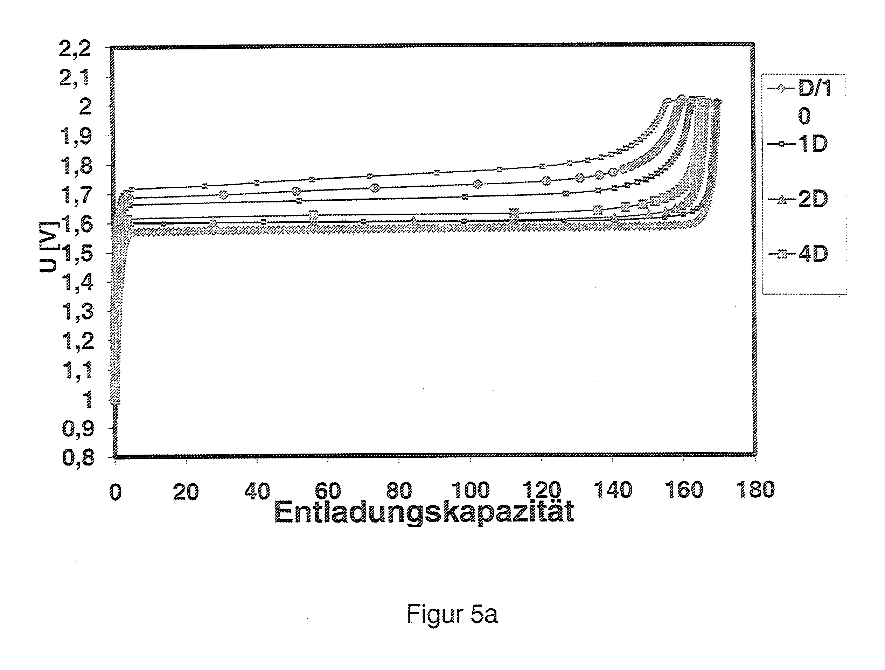

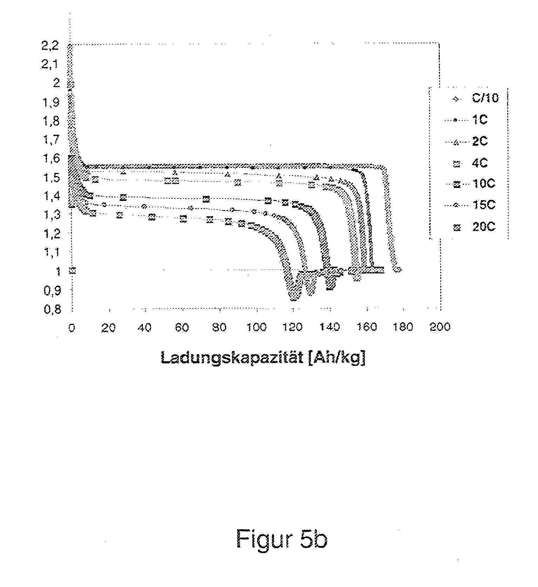

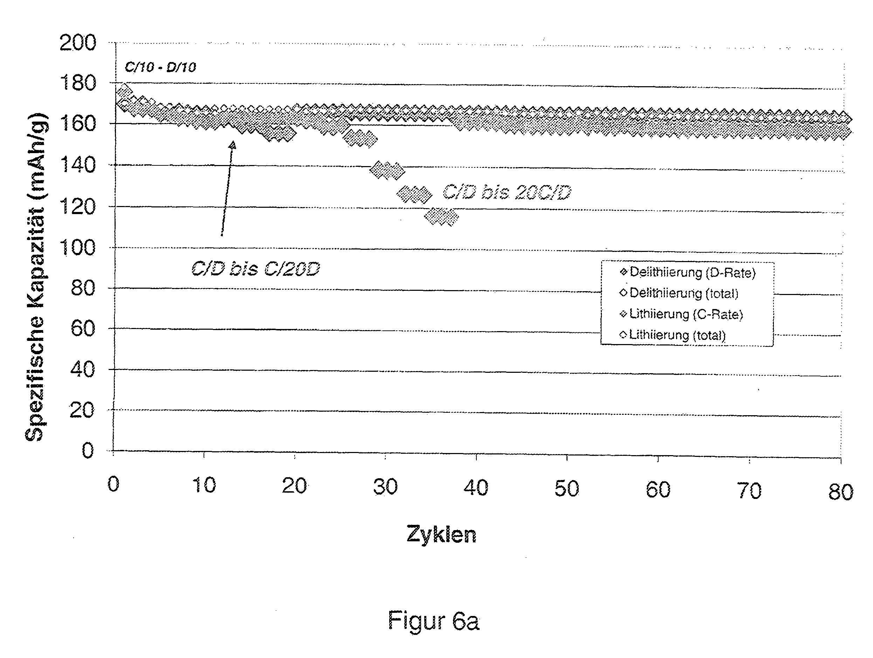

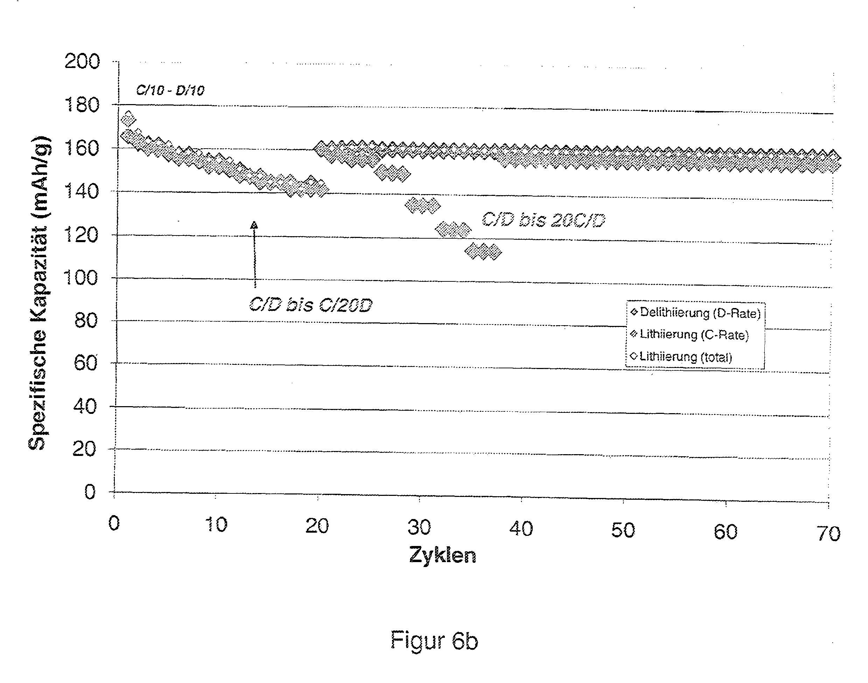

Am Ende einer Messung wurde noch ein Teil mit konstanter Spannung gefahren (CV-Schritt, "Absenkung"); dies ist in Figur 5 dargestellt und die Ergebnisse mit denjenigen in Figur 4 verglichen. In Figur 6 wird eine erfindungsgemäße Elektrode mit und ohne Absenkung verglichen.

In den Figuren 5a und 6a wurde ein CV-Schritt am Ende der Entladungsreaktion (Delithiierung) durchgeführt bis der Strom ungefähr C/50 erreicht. Man sieht einen kleinen Effekt erhöhter Polarisation für die Ladung (Lithiierung) bei Raten von 10C und mehr, jedoch ist der Effekt relativ klein und betrug ca. 50 mV bei 20C. Die Beladung mit aktiver Masse ist vergleichbar zu den Messungen ohne einen CV-Schritt bei Entladung (m_{act} = 2,55 mg/cm²). Dies bedeutet, dass sogar nach vollständiger Delithiierung der Elektrode eine ausreichende elektronische Leitfähigkeit im Material verbleibt, die es ermöglicht, dass das Material weiterhin als Elektrode funktionieren kann. Diese Messungen wurden gegen Lithiummetall durchgeführt, was bedeutet, dass es keine Beschränkung hinsichtlich der Gegenelektrode gibt. Diese Messungen belegen, dass eine leitmittelzusatzzusatzfreie erfindungsgemäße Lithiumtitanatanode nicht nur in einer Halbzelle sondern auch in einer vollständigen Zelle ihre Funktion erfüllt.

Weiterhin wurde gefunden, dass unter beiden Bedingungen, das heißt mit und ohne einen CV-Schritt am Ende der Entladung, die Elektroden noch eine gute Zyklusstabilität mit einem vernachlässigbaren Ausdünnen der Kapazität auch nach mehreren Hunderten von Zyklen zeigen. Das heißt das Weglassen eines Leitmittelzusatzes hat daher keinen negativen Effekt auf die Zyklenstabilität von Lithiumtitanatelektroden.

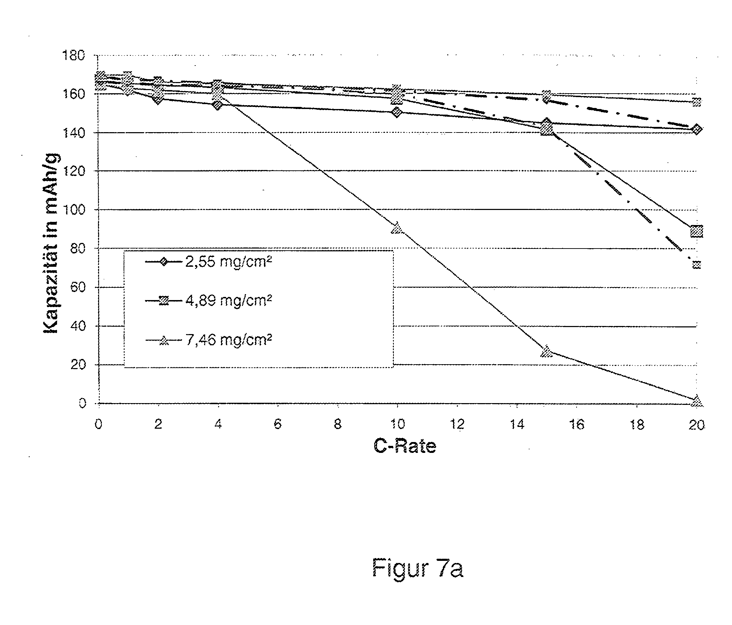

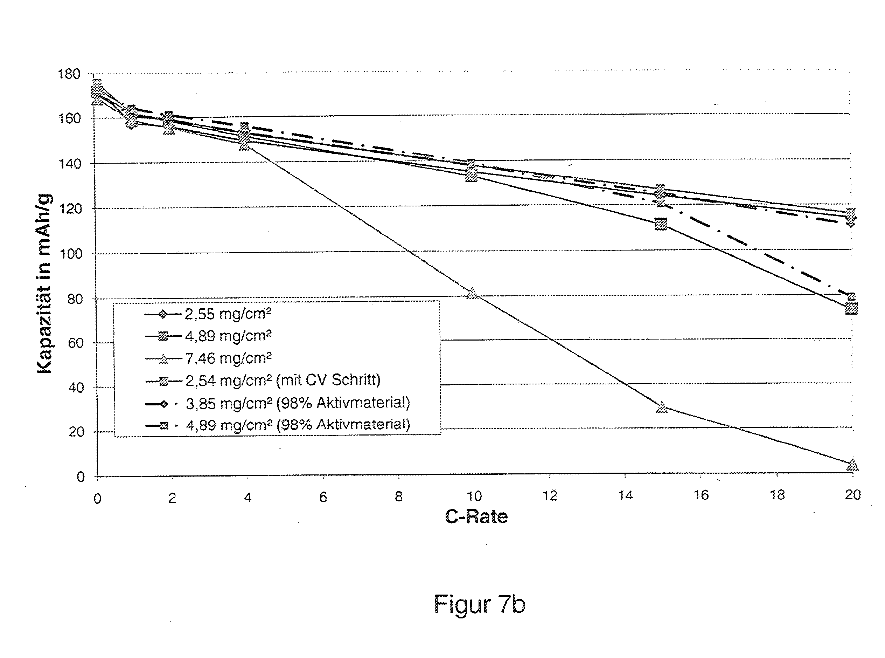

Figur 7a und 7b zeigen die Entladerate (Delithiierung) (7a) und die Laderate (Lithiierung) (7b) einer erfindungsgemäßen Elektrode mit 95 % Aktivmaterialgehalt mit verschiedenen Beladungen (in mg/cm²). Außerdem wurden zwei verschiedene Beladungen für eine Elektrode enthaltend 98 % Aktivmaterial und eine Elektrode mit 95 % Aktivmaterial mit einem zusätzlichen CV-Schritt bei der Entladung vermessen.

Die Ratenfähigkeit ist nur geringfügig niedriger als mit einem Leitmittelzusatz. Dies ist insbesondere bei Raten von > 10C besonders ausgeprägt. Die Delithiierungsreaktion (Entladung) ist üblicherweise schneller als die Lithiierungsreaktion (Ladung). Die Zunahme des Gehalts an Aktivmaterial von 95 auf 98 % scheint keinen Effekt auf die Ratenfähigkeit zu haben. Ebenfalls beeinflusst der CV-Schritt am Ende der Ladung nicht die Ratenfähigkeit.

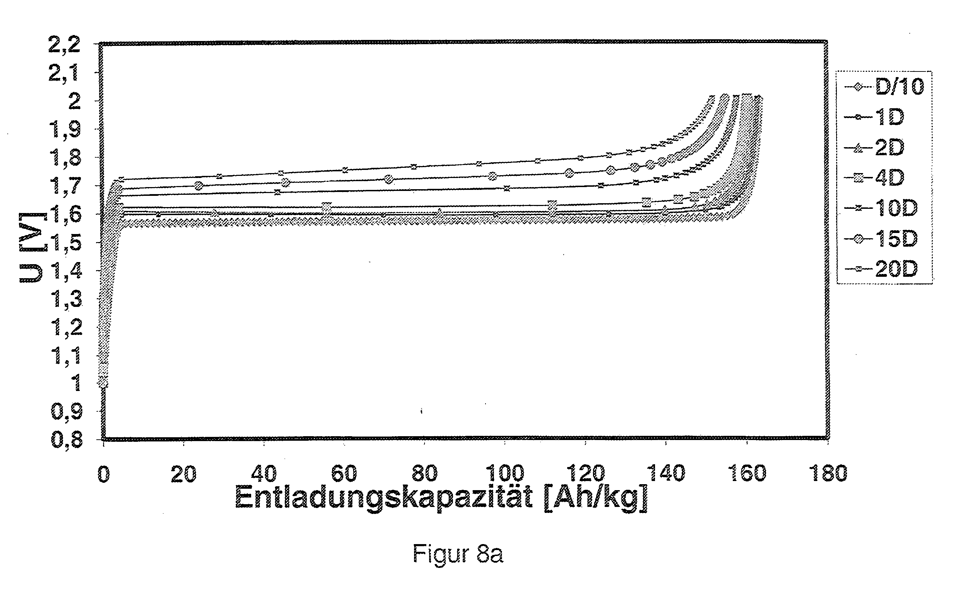

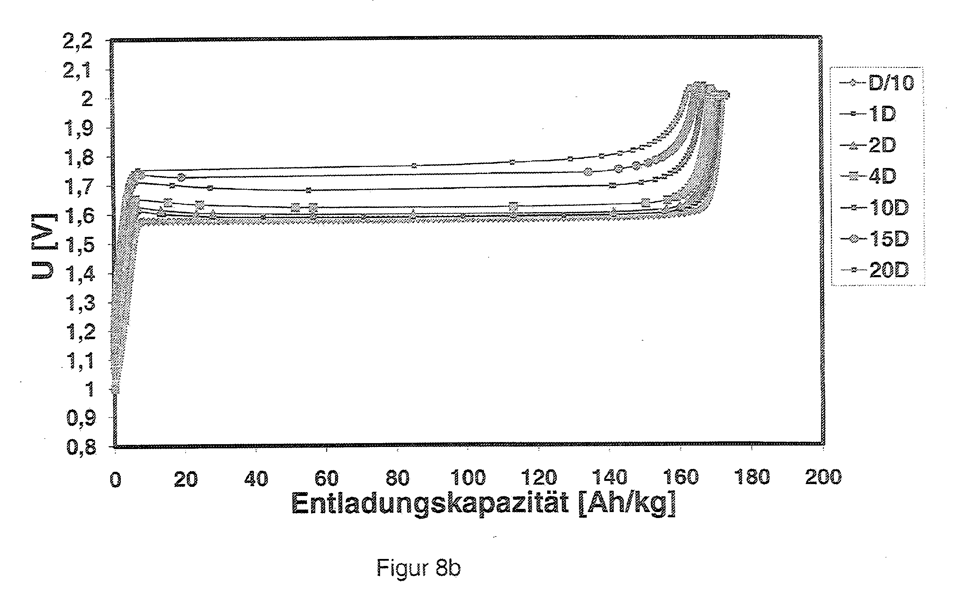

Figuren 8a bzw. 8b zeigen die Entladungskapazität einer erfindungsgemäßen Elektrode die kohlenstoffbeschichtete Lithiumtitanatpartikel enthält (Figur 8a) gegenüber einer üblichen Formulierung mit Leitmittelzusatz (8b). Figur 8a zeigt, dass es keinen nennenswerten Unterschied bezüglich der Polarisation zwischen der erfindungsgemäßen Elektrode und der Elektrode des Standes der Technik (Figur 8b) gibt. Es kann jedoch gesehen werden, dass das Ende der Ladung für die erfindungsgemäße Elektrode früher erreicht ist als für die Elektrode des Standes der Technik.

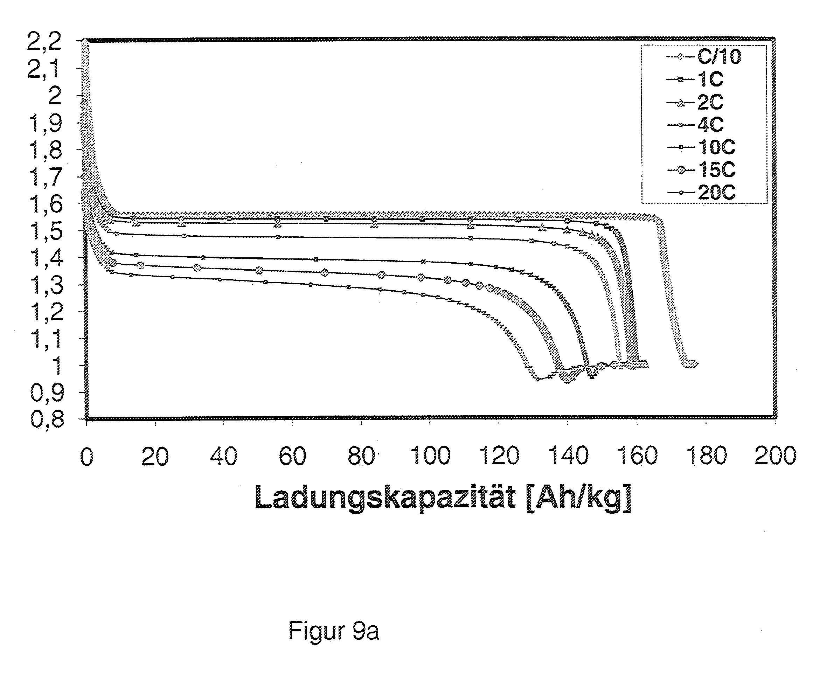

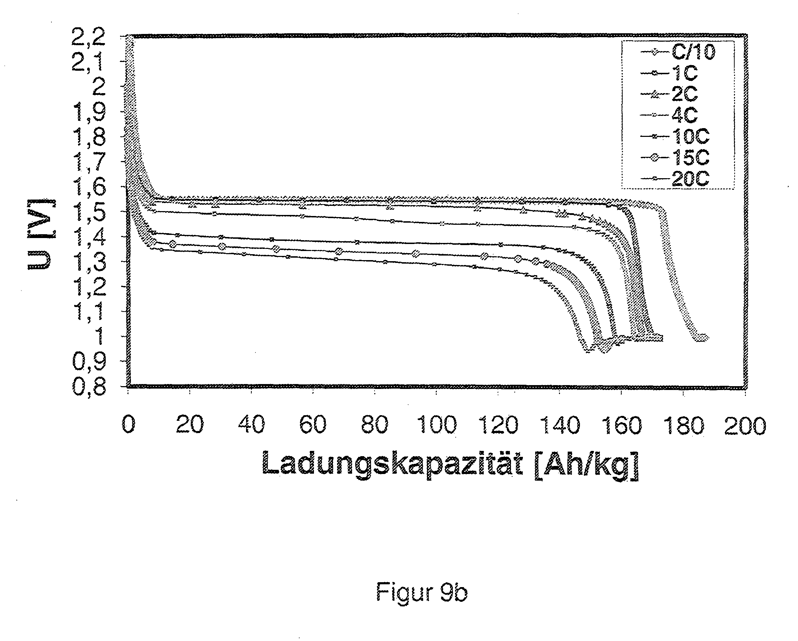

Figur 9a zeigt die Spannung bezogen auf die Ladekapazität einer erfindungsgemäßen Elektrode und einer Elektrode des Standes der Technik (9b) jeweils mit kohlenstoffbeschichtetem Lithiumtitanat als Aktivmaterial. Es konnte kein nennenswerter Unterschied in der Polarisation festgestellt werden.

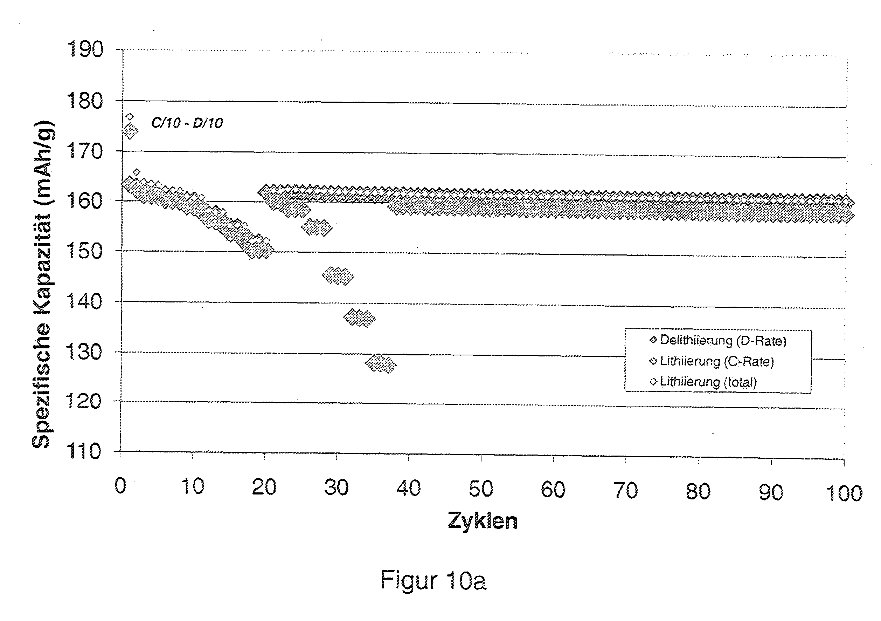

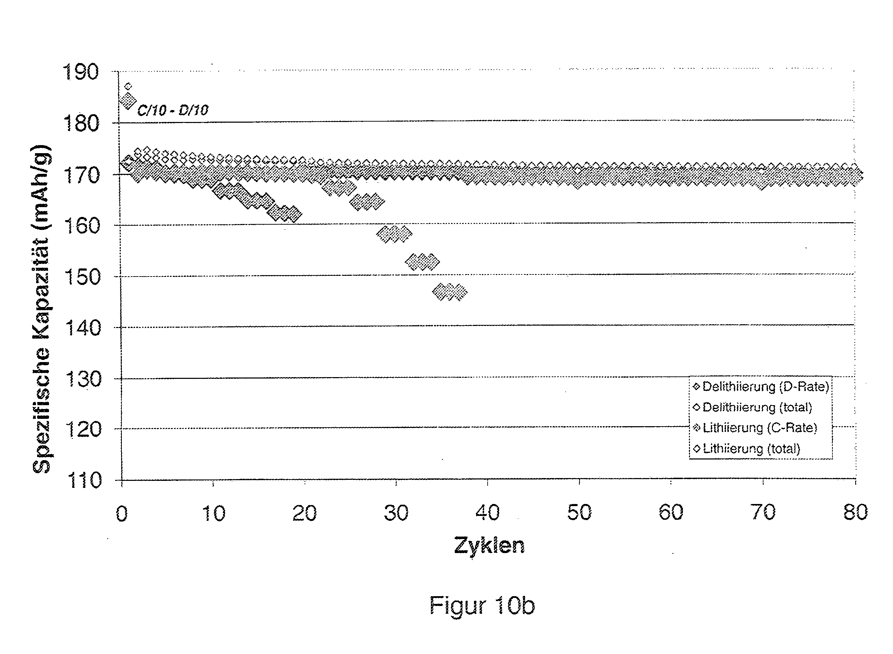

Die Ratenfähigkeit der erfindungsgemäßen Formulierung ist noch sehr hoch und ist sogar besser als die des nicht kohlenstoffbeschichteten Materials. In Figur 10 sind die Ratenfähigkeiten einer erfindungsgemäßen Elektrode enthaltend kohlenstoffbeschichtetes Lithiumtitanat (Figur 10a) mit einer Elektrode des Standes der Technik (kohlenstoffbeschichtetes Lithiumtitanat mit Leitmittelzusätzen)(Figur 10b) verglichen.

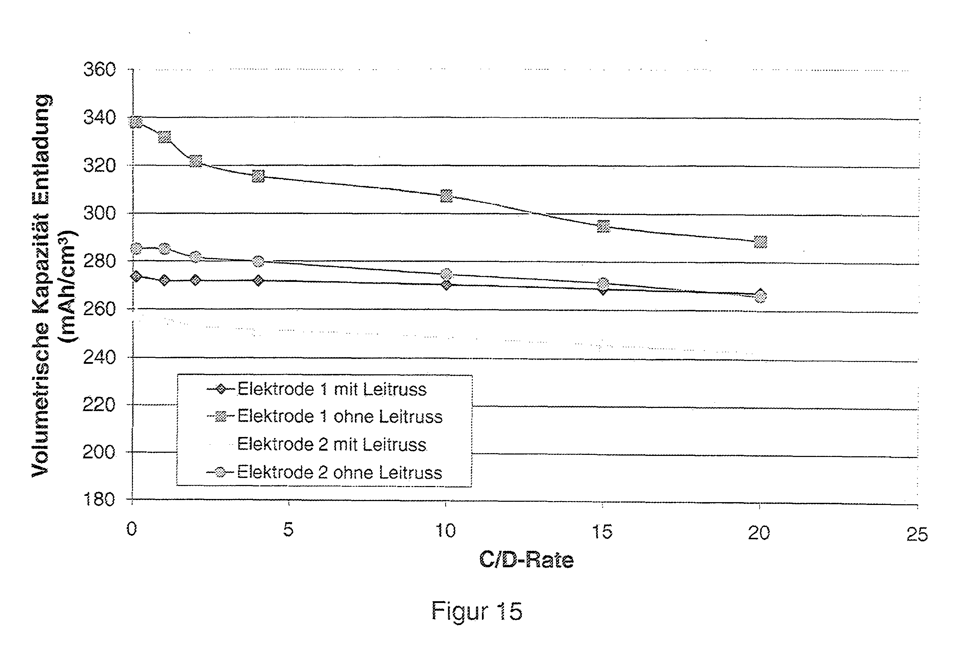

Figur 15 zeigt die volumetrische Kapazität bei Entladung erfindungsgemäßer Elektroden und Elektroden des Standes der Technik mit Lithiumtitanat als Aktivmaterial. Elektrode 2 enthält als Aktivmaterial mit Kohlenstoff beschichtetes Lithiumtitanat, Elektrode 1 unbeschichtetes. Daraus ist ersichtlich, dass die erfindungsgemäßen Elektroden z.T. deutlich bessere Werte zeigen als die entsprechenden Elektroden des Standes der Technik.

### 2.1.2. Erfindungsgemäße Kathoden

Die Standardelektrodenformulierungen für Kathoden betragen:
a) 95 Gew.-% Aktivmaterial und 5 Gew.-% PVdF-Binder (LiFePO₄ Kathoden) (erfindungsgemäß)
b) 93 Gew.-% Aktivmaterial und 7 Gew.-% PVdF-Binder (LiMn_{0,56}Fe_{0,33}Zn_{0,10}PO₄ Kathoden) (nicht erfindungsgemäß).

Das Aktivmaterial wurde zusammen mit dem Binder (bzw. für die Elektroden des Standes mit dem Leitmittelzusatz) in N-Methylpyrrolidon gemischt, auf eine vorbehandelte (Primer) Aluminiumfolie mittels einer Rakel aufgetragen und das N-Methylpyrrolidon bei 105°C unter Vakuum verdampft. Anschließend wurden die Elektroden ausgeschnitten (13 mm Durchmesser) und mit einer Walze bei Raumtemperatur gewalzt. Man beginnt bei einer Spaltbreite z.B. 0,1mm und tastet sich mit 5-10µm - Schritten auf die gewünschte Dicke vor. Dabei wird bei jeder Stufe 4x gewalzt und die Folie um 180° gedreht. Nach dieser Behandlung sollte die Dicke der Beschichtung zwischen 20-25µm liegen. Der Primer auf der Aluminiumfolie bestand aus einer dünnen Kohlenstoffbeschichtung, die die Haftung des Aktivmaterials verbessert, besonders wenn der Aktivmaterialgehalt in der Elektrode über 85 wt.-% beträgt.

Die Herstellung der elektrochemischen Zellen erfolgt dann wie für Lithiumtitanat beschrieben.

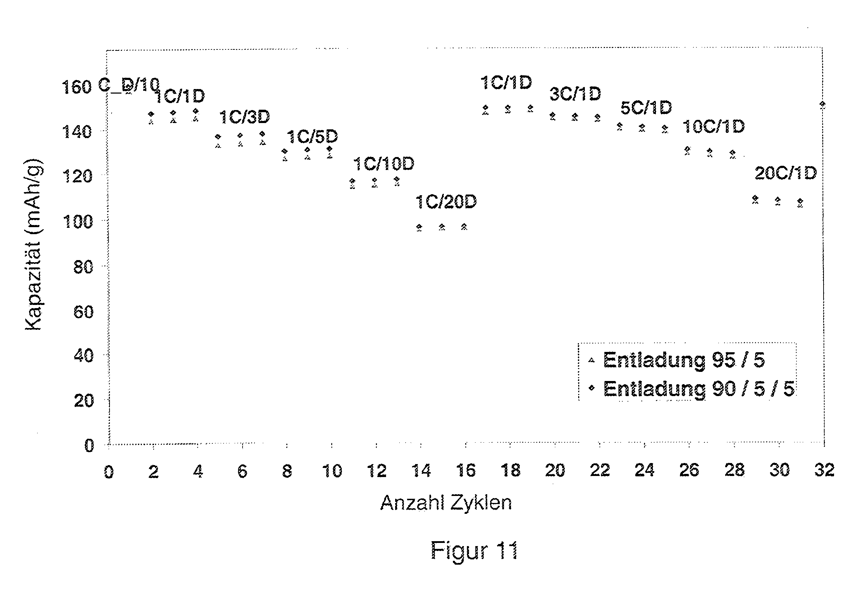

Figur 11 zeigt die Ladungs- und Entladungskapazität einer LiFePO₄ Elektrode des Standes der Technik bzw. einer erfindungsgemäßen Elektrode, das heißt ohne Leitmittelzusatz.

Die Elektroden wurden im Gegensatz zu den obengenannten Lithiumtitanatanoden viermal bei 10 Tonnen für 30 Sekunden nach Aufbringen der Aktivmasse gepresst. Die Elektrodendichten der Elektroden betrugen 2,08 g/cm³ und 2,27 g/cm³ für die Elektrode des Standes der Technik bzw. für die erfindungsgemäße Elektrode.

Die Ratenfähigkeit bei Ladungs- und Entladungsreaktionen wurden in Halbzellen gegen Lithium im Bereich von 2,0 bis 4,1 Volt gemessen. Die spezifische Kapazität beider Elektroden ist sehr ähnlich bei allen Ladungs-/Entladungsraten für diese Elektroden.

Weiterhin wurden Zyklenfähigkeitsexperimente bei Raumtemperatur im 2,0 Volt bis 4,0 Volt-Bereich in Halbzellen durchgeführt. Erfindungsgemäße LiFePO₄ Elektroden zeigten eine spezifische Kapazität bei der 1C-Rate. Es gibt keinen Unterschied in der Stabilität der spezifischen Kapazität gegenüber Elektroden des Standes der Technik.

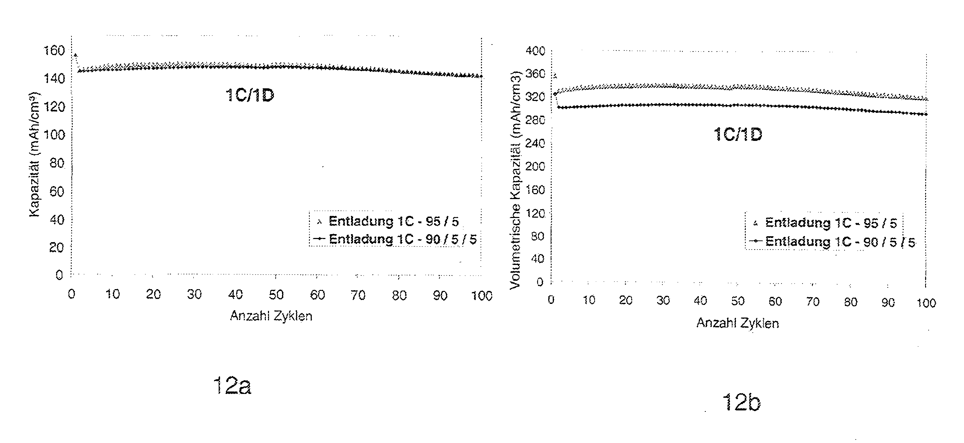

Hingegen findet sich eine Verbesserung in Bezug auf die volumetrische Kapazität erfindungsgemäßer Elektroden. (Figuren 12a und 12b)

Weiter wurden auch Elektroden des Standes der Technik und Elektroden mit LiMn_{0,56}Fe_{0,33}Zn_{0,10}PO₄ als Aktivmaterial miteinander verglichen:

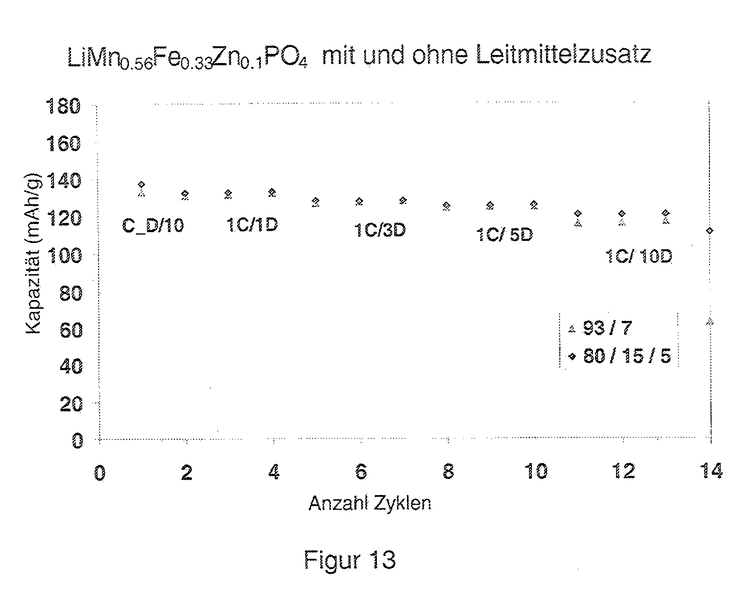

Figur 13 zeigt dabei die Ratenfähigkeit in einer Elektrode des Standes der Technik bzw. der LiMn_{0,56}Fe_{0,33}Zn_{0,10}PO₄ Elektroden und es wurde für die LiMn_{0,56}Fe_{0,33}Zn_{0,10}PO₄ Elektroden eine exzellente relative Entladungsrate gefunden.

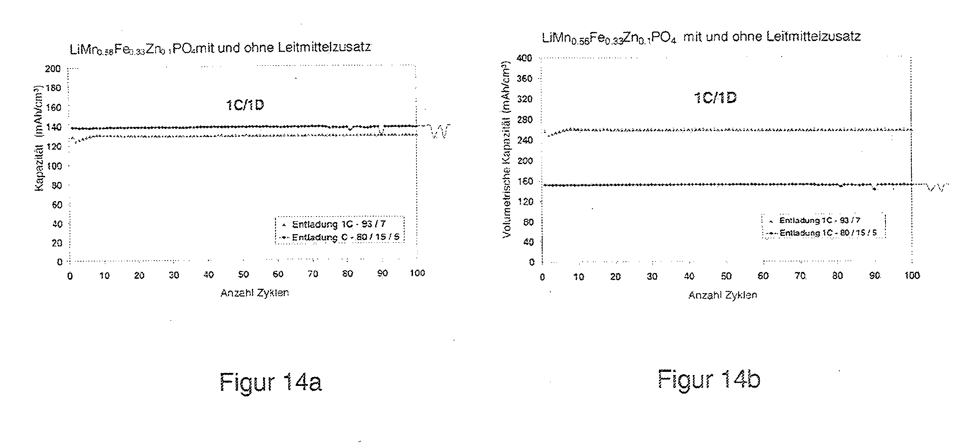

LiMn_{0,56}Fe_{0,33}Zn_{0,10}PO₄ Elektroden zeigten eine hervorragende Zyklenstabilität bei 1C/1D. Es wird kein Unterschied in der Stabilität verglichen mit LiMn_{0,56}Fe_{0,33}Zn_{0,10}PO₄ Elektroden enthaltend das gleiche Aktivmaterial beobachtet. Allerdings weisen die LiMn_{0,56}Fe_{0,33}Zn_{0,10}PO₄ Elektroden eine verbesserte volumetrische Kapazität auf (Figuren 14a und 14b).

## Patentansprüche

1. Leitmittelzusatzfreie Elektrode für eine Sekundärlithiumionenbatterie mit einer Lithium-Metall-Sauerstoffverbindung, die ausgewählt ist aus der Gruppe bestehend aus dotierten oder nicht dotierten Lithiumtitanaten mit Spinellstruktur, Lithiumphosphaten und Lithiumvanadaten als Aktivmaterial, deren Elektrodenformulierung einen Kohlenstoffanteil von maximal 1,5 Gew.-% bezogen auf das Aktivmaterial aufweist, weiter enthaltend einen Binder und wobei der Anteil des Aktivmaterials ≥ 94 Gew.-% beträgt.

2. Elektrode nach Anspruch 1, worin die Partikel des Aktivmaterials eine Kohlenstoffbeschichtung aufweisen.

3. Elektrode nach Anspruch 1 oder 2, worin das Aktivmaterial ein dotiertes oder nicht dotiertes Lithiumtitanat ist.

4. Elektrode nach Anspruch 1 oder 2, worin das Aktivmaterial ein dotiertes oder nicht dotiertes Lithium-Metall-Phosphat ist.

5. Elektrode nach Anspruch 4, worin das dotierte oder nicht dotierte Lithium-Metall-Phosphat eine geordnete oder modifizierte Olivinstruktur hat.

6. Elektrode nach Anspruch 5 mit einem dotierten oder nicht dotierten Lithium-Metall-Phosphat der Formel
LiₓN_{y}M_{1-y}PO₄,
wobei N ein Metall ist, ausgewählt aus der Gruppe Mg, Zn, Cu, Ti, Zr, Al, Ga, V, Sn, B oder Mischungen davon;
M ein Metall ist, ausgewählt aus der Gruppe Fe, Mn, Co, Ni, Cr, Cu, Ti, Ru;
und mit 0 < x ≤ 1 und 0 ≤ y < 1.

7. Elektrode nach einem der Ansprüche 5 bis 6 weiter enthaltend eine von der ersten verschiedene zweite Lithium-Metall-Sauerstoffverbindung, ausgewählt aus dotierten oder nicht dotierten Lithium-Metall-Oxiden, Lithium-Metall-Phosphaten, Lithium-Metall-Vanadaten und Mischungen davon.

8. Elektrode nach Anspruch 7, worin die zweite Lithium-Metall-Sauerstoffverbindung ausgewählt ist aus dotiertem oder nicht dotiertem Lithiummanganoxid, Lithiumcobaltoxid, Lithiumeisenmanganphosphat, Lithiummanganphosphat.

9. Sekundärlithiumionenbatterie mit einer Anode, einer Kathode und einem Elektrolyten enthaltend eine Elektrode nach einem der vorhergehenden Ansprüche.

10. Sekundärlithiumionenbatterie nach Anspruch 9 mit dotiertem oder nicht dotiertem Lithiumtitanat als Aktivmaterial der Anode.

11. Sekundärlithiumionenbatterie nach Anspruch 9 oder 10 mit dotiertem oder nicht dotiertem Lithium-Metall-Phosphat als einem Aktivmaterial der Kathode.

## Claims

1. Electrode, free of added conductive agent, for a secondary lithium-ion battery with a lithium-metal-oxygen compound, selected from the group consisting of doped or non-doped lithium titanates with spinel structure, lithium phosphates and lithium vanadates as active material, the electrode formulation of which has a proportion of carbon of at most 1.5 wt.-% relative to the active material, further containing a binder and wherein the proportion of the active material is ≥ 94 wt.-%.

2. Electrode according to claim 1, wherein the particles of the active material have a carbon coating.

3. Electrode according to claim 1 or 2, wherein the active material is a doped or non-doped lithium titanate.

4. Electrode according to claim 1 or 2, wherein the active material is a doped or non-doped lithium metal phosphate.

5. Electrode according to claim 4, wherein the doped or non-doped lithium metal phosphate has an ordered or modified olivine structure.

6. Electrode according to claim 5 with a doped or non-doped lithium metal phosphate of the formula
LiₓN_{y}M_{1-y}PO₄,
wherein N is a metal selected from the group Mg, Zn, Cu, Ti, Zr, Al, Ga, V, Sn, B or mixtures thereof;
M is a metal selected from the group Fe, Mn, Co, Ni, Cr, Cu, Ti, Ru;
and with 0 < x ≤ 1 and 0 ≤ y < 1.

7. Electrode according to one of claims 5 to 6 further containing a second lithium-metal-oxygen compound, different from the first, selected from doped or non-doped lithium metal oxides, lithium metal phosphates, lithium metal vanadates and mixtures thereof.

8. Electrode according to claim 7, wherein the second lithium-metal-oxygen compound is selected from doped or non-doped lithium manganese oxide, lithium cobalt oxide, lithium iron manganese phosphate, lithium manganese phosphate.

9. Secondary lithium-ion battery with an anode, a cathode and an electrolyte containing an electrode according to one of the previous claims.

10. Secondary lithium-ion battery according to claim 9 with doped or non-doped lithium titanate as active material of the anode.

11. Secondary lithium-ion battery according to claim 9 or 10 with doped or non-doped lithium metal phosphate as an active material of the cathode.

## Revendications

1. Électrode sans additifs conducteurs pour une batterie à lithium-ion secondaire ayant un composé de lithium-métal-oxygène sélectionné dans le groupe consistant en des titanates de lithium à structure de type spinelle, des phosphates de lithium et des vanadates de lithium dopés ou non dopés comme matériau actif dont la formulation d'électrode est telle que la proportion de carbone est au plus de 1,5 % en poids par rapport au matériau actif et qui contient également un liant, la proportion de matériau actif étant ≥94 % en poids.

2. Électrode selon la revendication 1, dans laquelle les particules du matériau actif ont un revêtement de carbone.

3. Électrode selon la revendication 1 ou 2, dans laquelle le matériau actif est un titanate de lithium dopé ou non dopé.

4. Électrode selon la revendication 1 ou 2, dans laquelle le matériau actif est un phosphate de lithium-métal dopé ou non dopé.

5. Électrode selon la revendication 4, dans laquelle le phosphate de lithium-métal dopé ou non dopé a une structure de type olivine ordonnée ou modifiée.

6. Électrode selon la revendication 5 à phosphate de lithium-métal dopé ou non dopé de la formule
LiₓN_{y}M_{1-y}PO₄,
où N est un métal sélectionné dans le groupe Mg, Zn, Cu, Ti, Zr, Al, Ga, V, Sn, B ou des mélanges de ceux-ci ;
M est un métal sélectionné dans le groupe Fe, Mn, Co, Ni, Cr, Cu, Ti, Ru ;
et où 0 < x ≤ 1 et 0 ≤ y < 1.

7. Électrode selon l'une des revendications 5 à 6, qui contient également un second composé de lithium-métal-oxygène différent du premier et sélectionné parmi des oxydes de lithium-métal, des phosphates de lithium-métal, des vanadates de lithium-métal dopés ou non dopés et des mélanges de ceux-ci.

8. Électrode selon la revendication 7, dans laquelle le second composé de lithium-métal-oxygène est sélectionné parmi un oxyde de lithium-manganèse, un oxyde de lithium-cobalt, un phosphate de lithium-fer-manganèse et un phosphate de lithium-manganèse dopé ou non dopé.

9. Batterie à lithium-ion secondaire ayant une anode, une cathode et un électrolyte qui contient une électrode selon l'une des revendications précédentes.

10. Batterie à lithium-ion secondaire selon la revendication 9, dans laquelle le matériau actif de l'anode est un titanate de lithium dopé ou non dopé.

11. Batterie à lithium-ion secondaire selon la revendication 9 ou 10, dans laquelle le matériau actif de la cathode est un phosphate de lithium-métal dopé ou non dopé.
